# FASCICULE DE BREVET EUROPEEN

(11) **EP 0 802 404 B1**
(45) Date de publication et mention de la délivrance du brevet: **08.01.2003**
(21) Numéro de dépôt: 97870049.0
(22) Date de dépôt: 15.04.1997
(51) Int. Cl.: G01L 5/10

(54) **Capteur de force ajustable**
Einstellbarer Kraftsensor
Adjustable force sensor

(30) Priorité: 16.04.1996 BE 9600326
(43) Date de publication de la demande: 22.10.1997
(73) Titulaire: HUMBLET, Fernand, B-4170 Comblain-au-Pont (BE)
(72) Inventeur: HUMBLET, Fernand, B-4170 Comblain-au-Pont (BE)
(74) Mandataire: Van Malderen, Michel

(56) Documents cités:
- WO-A-94/17382
- FR-A- 2 649 786
- US-A- 3 653 258

## Description

### Objet de l'invention

La présente invention est relative à un capteur de force dit "trois points" destiné à être fixé sur une structure flexible telle qu'un câble, une élingue, une corde, etc. afin de permettre de mesurer ou de contrôler la force, en particulier la charge appliquée à ladite structure.

L'invention vise plus particulièrement des capteurs de force du type de ceux décrits dans la publication PCT WO 94/17382.

### Etat de la technique

Le document WO 94/17382 décrit un capteur de force qui comporte un corps de déformation affectant la forme générale d'un E. La structure flexible telle qu'un câble prend appui sur les deux bras d'extrémité du capteur et est fixée par une clame de fixation sur la barre centrale du E. Le principe essentiel de fonctionnement est que, lorsque le câble est tendu et repose sur les deux appuis d'extrémité, il est dévié par la clame de fixation de manière qu'une traction exercée sur le câble sollicite le corps du capteur et permette ainsi une mesure des contraintes traduisant l'effort de traction dans le câble. Ce dispositif se distingue par sa fiabilité, sa légèreté, sa précision et sa simplicité.

Il trouve de nombreuses applications en fournissant un signal électrique grâce à une cellule de mesure qui peut fournir des valeurs numériques et des signaux d'alarme.

### Buts de l'invention

Les dispositifs du type précité donnent totale satisfaction. Cependant, tels qu'ils sont décrits dans le document précité, ils comportent certaines limitations intrinsèques. En principe, l'appareil convient pour une plage limitée de valeurs de contrainte. En effet, il existe une valeur maximale déterminée par la conception structurelle qu'il convient de ne pas dépasser. Il existe également une valeur minimale car la précision de la mesure diminue fortement pour des valeurs de contrainte faibles à mesurer.

D'autre part, le dispositif est en principe prévu pour s'accommoder de faibles variations seulement du diamètre d'un câble à mesurer. Ceci ne présente pas nécessairement d'inconvénients du point de vue de l'utilisateur qui souvent n'utilise un appareillage d'un type donné que pour des plages relativement limitées à la fois de diamètre de câble et de contrainte. Du point de vue du constructeur cependant, les adaptations en fonction des exigences des différents utilisateurs entraînent la nécessité d'usiner et d'avoir en stock un grand nombre d'éléments constitutifs. Il serait donc utile de disposer d'un capteur modulable en fonction des besoins, de manière simple et efficace, et de préférence dont les éléments constitutifs sont autant que possible de type "monobloc" et standardisé pour s'adapter aux différentes plages de contraintes et de diamètres de câble.

L'invention vise à atteindre ces buts.

### Principaux éléments caractéristiques de l'invention

La présente invention concerne un capteur de force trois points destiné à être fixé sur une structure flexible telle qu'un câble, afin de mesurer ou de contrôler une charge ou une force appliquée à ladite structure flexible, comprenant deux bras d'appui solidaires du corps du capteur servant d'appui et de guide à ladite structure flexible et une barre centrale munie d'une clame de fixation assurant une déviation de la structure flexible hors de la trajectoire droite déterminée par les bras d'appui.

A titre principal, ce capteur se caractérise par le fait que le corps du capteur comporte une entaille sur une portée importante de sa longueur en formant une partie externe déformable et une partie interne essentiellement rigide, la barre centrale portant la clame de fixation coulissant librement dans la partie interne et étant fixée sur la partie externe, des moyens de réglage étant prévus pour modifier la longueur du bras de levier que forme ladite partie déformable, ainsi que des moyens de détection de la déformation de ladite partie externe.

Lesdits moyens de réglage prévus pour modifier la longueur du bras de levier peuvent être constitués par des alésages disposés transversalement par rapport à l'entaille dans la zone d'extrémité de cette entaille.

Un axe calibré glissé dans ces alésages permet de modifier la longueur du bras de levier.

Lorsque la structure flexible est soumise à une traction, par suite de la déviation du câble, un effort de traction est transmis par la barre centrale sur la partie externe déformable ce qui se traduit par le rapprochement de l'extrémité libre de la partie externe vers la partie interne. A proximité de cette extrémité, se trouve une vis de tarage qui attaque une cellule de mesure logée de préférence dans la partie interne du capteur.

Lorsque l'axe de déformation est logé dans l'alésage le plus proche du fond de l'entaille, le bras de levier est le plus long. En revanche, ce bras de levier est le plus court lorsque l'axe calibré est disposé dans l'alésage le plus éloigné de ce fond. Généralement, au moins une position intermédiaire est prévue entre ces positions extrêmes mais bien entendu plusieurs positions intermédiaires intercalaires peuvent être prévues. Le contact est avantageusement prévu pour comporter une vis de tarage. Le logement de la cellule de mesure dans la partie interne du capteur protège efficacement celle-ci des chocs et autres agressions externes. Il est possible ainsi au départ d'un seul corps de capteur, en jouant sur la longueur du bras de levier, de s'adapter à une large plage d'efforts de traction. Ce corps de capteur est de préférence monobloc et réalisé en un alliage léger.

Afin de pouvoir s'adapter à des diamètres de câbles différents, dans une plage nettement plus grande que ne le permettait la solution de l'état de la technique, il est prévu d'une part que les bras d'appui et de guidage présentent une forme évasée. De plus, le fond du logement de câble dans la barre centrale est de forme arrondie et la clame de fixation comporte deux faces opposées adaptées à des diamètres différents de câble de manière qu'en retournant simplement la clame, on puisse fixer sur ladite barre des structures flexibles, telles que des câbles de petit diamètre et de grand diamètre (en passant également par les câbles de grosseur intérmédiaire).

D'autres détails et caractéristiques complémentaires de l'invention paraîtront à la lecture de la description détaillée qui suit en référence aux dessins annexés.

### Brève description des dessins

La figure 1 représente une vue latérale du capteur selon l'invention ainsi que certains éléments amovibles équipant cette structure;
La figure 2 représente une vue de la face avant correspondant à la figure 1;
La figure 3 représente la face arrière de ce même capteur;
La figure 4 représente une vue de détails latérale, c'est-à-dire perpendiculaire à la direction générale de la structure flexible (câble) adaptée à un câble de petite dimension;
La figure 5 représente la vue de cette même structure mais tournée à 90° et;
Les figures 6 et 7 sont des figures correspondant respectivement aux figures 4 et 5 précédentes avec un positionnement de la clame de fixation après retournement pour s'adapter à un câble de plus grande dimension.

Des repères de référence identiques sont utilisés pour des éléments identiques ou similaires pour les différentes vues.

### Description détaillée de l'invention

Le corps du capteur 1 est réalisé en alliage d'aluminium ou en acier et constitue la cellule de déformation. Elle comporte une barre de traction centrale 2 et une clame de fixation 3 pour une structure flexible, en l'occurrence un câble 20. Le câble 20 est reçu aux deux extrémités du corps 1 dans des bras d'appui 7 fixés aux deux extrémités du corps 1. Le câble, lorsqu'il est fixé par la clame 3 sur la barre 2, est dévié de la trajectoire rectiligne entre les deux bras d'appui 7. On réalise ainsi les trois points de déformation (respectivement les deux points 7 et le point 2) du capteur de force à trois points.

Afin d'assurer la fonction de clamage et la réversibilité qui sera décrite ultérieurement de la clame, des vis de serrage 4 sont prévues de part et d'autre de la barre centrale 2. Cette barre centrale 2 se prolonge par une tige de traction 5 qui pénètre dans le corps du capteur, et est fixée dans le taraudage 18.

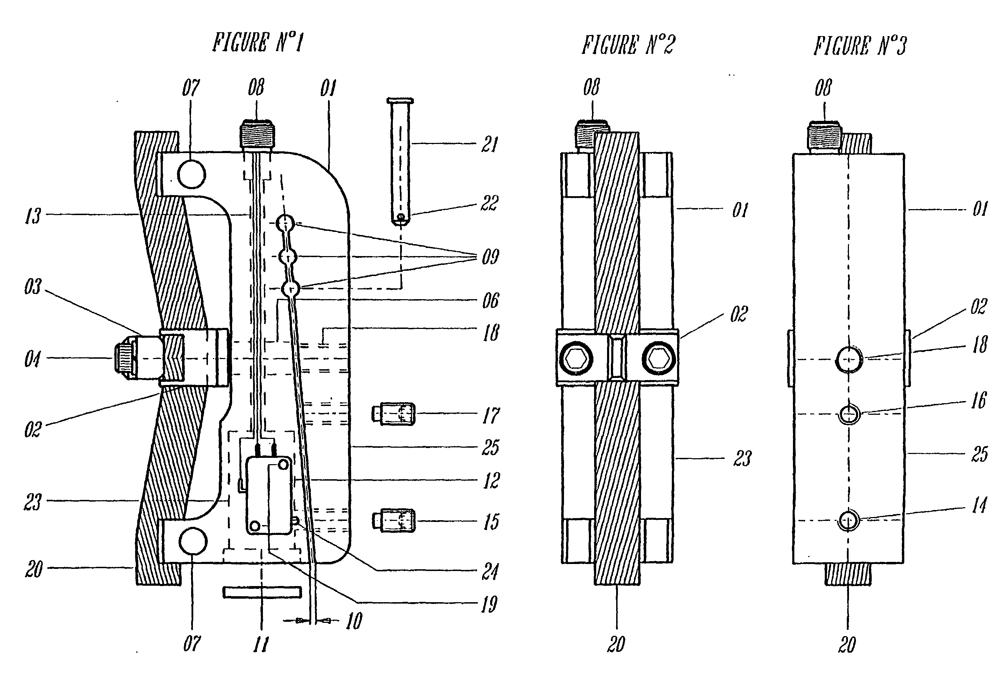

Ainsi qu'il est représenté, le corps 1 comporte une entaille sur une grande partie de sa longueur, le repère 10 représentant la hauteur de cette entaille. La partie droite du corps du capteur représentée à la figure 1 constitue la partie externe déformable du capteur. La partie restante du capteur est qualifiée de partie interne. Un alésage dans cette partie interne permet le coulissement de la tige de traction 5 qui est solidarisé à la partie déformable. Les points d'appui 7 comportent des points d'appui cylindriques en acier à haute résistance de manière à éviter toute dégradation de la structure flexible. Des alésages latéraux 9 sont prévus à différentes distances depuis le fond de l'entaille 10 et peuvent recevoir un axe calibré 21. En fonction de la disposition dans les alésages respectifs et de la position de l'axe 21, il devient possible de gérer la déformation de la cellule de traction pour s'adapter à des valeurs de contrainte variables du fait que le positionnement de cet axe permet de modifier la longueur du bras de levier séparant le point de fixation de la tige de traction à la partie externe déformable. L'axe calibré 21 est pourvu d'un trou 22 permettant l'insertion d'une goupille de sécurité.

Le capteur est équipé d'une fiche 8 permettant de connecter un cordon électrique à un micro-rupteur 12 intégré dans le corps du capteur. Le micro-rupteur 12 est destiné à couper le circuit électrique lorsque la valeur de consigne est dépassée. L'élément 11 représente un bouchon amovible donnant accès au micro-rupteur qui est logé dans la partie non déformable du capteur.

Le repère 14 représente un trou taraudé permettant de recevoir une vis de tarage 15 permettant d'étalonner le seuil de coupure qui est atteint lorsque la vis 15 touche le contact sensible du micro-rupteur 24. A titre de sécurité, il est prévu une vis de butée 17 reçue dans un trou taraudé 16 et qui sert à limiter la course de déformation de manière à éviter la destruction de la cellule en cas de surcharge.

18 représente un trou taraudé recevant la partie filetée d'extrémité de la tige de traction 5 en solidarisant ainsi cette tige à la partie externe déformable du capteur.

19 représente des trous taraudés permettant la fixation du micro-rupteur dans la cellule de déformation.

24 représente l'élément sensible du micro-rupteur 12 destiné à la mesure de la déformation de la partie externe sous l'effet de la vis de tarage 15.

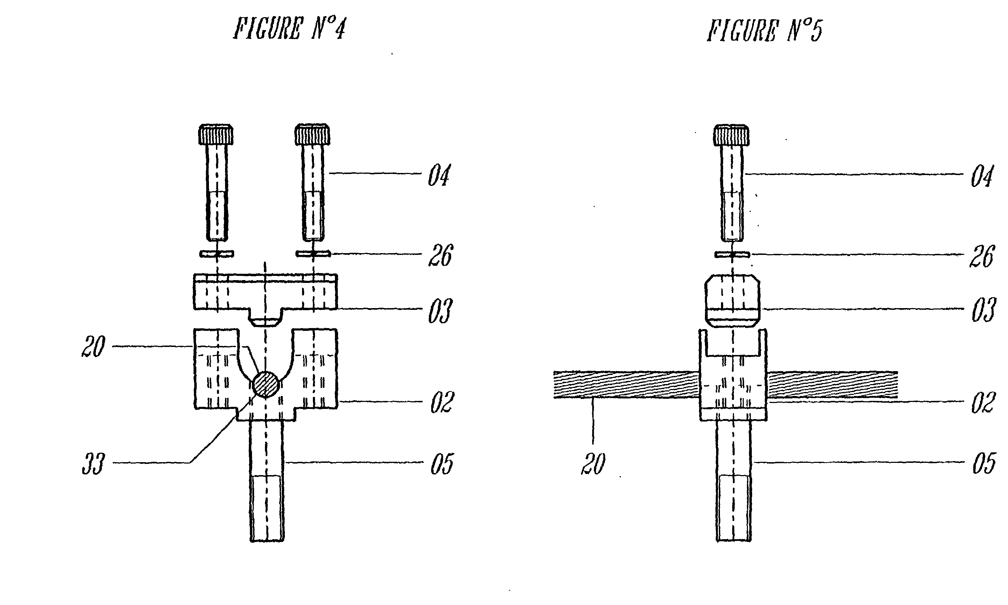

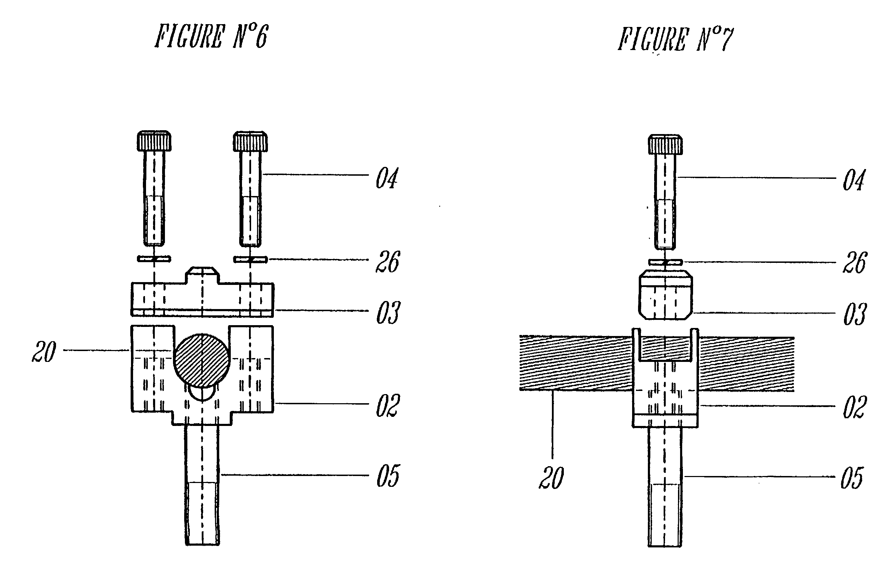

En se reportant aux figures 4 à 7, on peut s'apercevoir que la barre centrale 2 comporte un fond arrondi 33 permettant de recevoir un câble de petit diamètre 20 mais également une partie plus large (voir figures 4 et 5) ainsi qu'un câble de plus grand diamètre 20 (voir figures 6 et 7). La clame 3 porte sur une face un téton permettant de fixer les câbles de petit diamètre. Cette même clame, lorsqu'elle est retournée, permet d'assurer la fixation de câbles de plus grand diamètre.

De la manière classique, le micro-rupteur est relié électriquement vers l'extérieur en direction de la fiche 8 afin de réaliser les connexions électriques nécessaires au fonctionnement.

Bien qu'on ait décrit des formes d'exécution préférées de l'invention, il doit être bien entendu que de nombreuses formes d'exécution spécifiques restent possible dans le cadre de l'invention.

C'est ainsi qu'on a représenté trois alésages 9 mais que bien évidemment l'invention n'est pas limitée ni à cette forme spécifique de réglage du bras de levier, ni à ce nombre particulier de moyens de réglage.

## Revendications

1. Capteur de force trois points destiné à être fixé sur une structure flexible (20) telle qu'un câble, afin de mesurer ou de contrôler une charge ou une force appliquée à ladite structure flexible (20), comprenant deux bras d'appui (7) solidaires du corps (1) du capteur servant d'appui et de guide à ladite structure flexible (20) et une barre centrale (2) munie d'une clame de fixation (3) assurant une déviation de la structure flexible (20) hors de la trajectoire droite déterminée par les bras d'appui (7), **caractérisé en ce que** le corps (1) du capteur comporte une entaille (10) sur une portée importante de sa longueur en formant une partie externe déformable (25) et une partie interne essentiellement rigide (23), la barre centrale (2) portant la clame de fixation (3) coulissant librement dans la partie interne et étant fixée sur la partie externe (25), des moyens de réglage (9, 21) étant prévus pour modifier la longueur du bras de levier que forme ladite partie déformable (25), ainsi que des moyens de détection (12) de la déformation de ladite partie externe.

2. Capteur selon la revendication 1, **caractérisé en ce que** lesdits moyens de réglage prévus pour modifier la longueur du bras de levier sont constitués par des alésages (9) disposés transversalement par rapport à l'entaille dans la zone d'extrémité de cette entaille et par un axe calibré (21) glissé dans ces alésages permettant de modifier la longueur du bras de levier.

3. Capteur selon la revendication 1 ou 2, **caractérisé en ce que** les bras d'appui et de guidage (7) présentent une forme évasée, que le fond du logement de câble dans la barre centrale (2) est de forme arrondie et que la clame de fixation (3) comporte deux faces opposées adaptées à des diamètres différents de câble de manière qu'en retournant simplement la clame, on puisse fixer sur ladite barre des structures flexibles, telles que des câbles de petit diamètre et de grand diamètre.

## Patentansprüche

1. Dreipunkte Kraftsensor, der auf eine flexible Struktur (20), wie einem Kabel, befestigt wird, um eine Last, oder Kraft, die auf die genannte flexible Struktur (20) ausgeübt wird, zu messen oder zu kontrollieren; umfassend zwei Stützarme (7), die mit dem Körper (1) des Sensors fest verbunden sind und die als Stütze- und Führungsvorrichtung der genannten flexiblen Struktur (20) dienen und eine zentrale Stange (2), ausgestattet mit einer Befestigungsvorrichtung (3), die eine Umleitung der flexiblen Struktur (20) außerhalb der von den Stützarmen (7) bestimmten geraden Strecke, gewährleistet; **dadurch gekennzeichnet, daß** der Körper (1) des Sensors einen Schlitz (10) auf einem großen Teil seiner Länge aufweist, daß er einen verformbaren äußeren Teil (25) und einen im wesentlichen starren inneren Teil (23) mit einer zentralen Stange (2) bildet, die mit einer Befestigungsvorrichtung (3), die frei im inneren Teil gleitet und die an dem äußeren Teil (25) befestigt ist, ausgestattet ist, und daß Einstellungsmöglichkeiten (9, 21), die vorgesehen sind, um die Hebelarmlänge von dem verformbaren Teil (25) zu ändern und daß Detektionsmittel (12) der Verformung des externen Teils vorhanden sind.

2. Sensor gemäß Anspruch 1, **dadurch gekennzeichnet, daß** die genannten Einstellungsmöglichkeiten, die vorgesehen sind, um die Hebelarmlänge zu ändern, aus Ausbohrungen (9) bestehen, die quer im Vergleich zum Schlitz in der Endzone dieses Schlitzes angelegt sind und weiterhin aus einer Kalibrierachse (21) besteht, die in die Aufbohrungen eingeführt wird und die es ermöglicht, die Hebelarmlänge zu modifizieren.

3. Sensor gemäß Anspruch 1 oder 2, **dadurch gekennzeichnet daß**, die Stütz- und Führungsarme (7) des Kabels eine runde Ausweitung in der zentralen Stange bilden und daß die Befestigungsvorrichtung (3) mit zwei gegenüberliegenden Seiten ausgestattet ist, die an Kabel mit unterschiedlichen Durchmessern angepaßt sind, so daß flexible Strukturen, wie Kabel mit kleineren und größeren Durchmessern, auf die genannte Stange befestigt werden können.

## Claims

1. Three-point force sensor to be fixed on a flexible structure (20) such as a cable, in order to measure or control a load or force applied to said flexible structure (20), comprising two support arms interlinked with the body (1) of the sensor used as a support and as a guide for said flexible structure (20), and a central bar provided with a fixing clamp (3) which ensures a deviation of the flexible structure (20) outside of the straight path determined by the support arms (7), **characterized in that** the body (1) of the sensor comprises a groove (10) on an important span of its length forming a deformable external part (25) and an essentially rigid internal part (23), the central bar (2) supporting the fixing clam (3) freely sliding in the internal part and being fixed onto the external part (25), regulation means (9, 21) being provided in order to change the length of the lever arm which is formed by said deformable part (25), as well as detection means (12) of the deformation of said external part.

2. Sensor according to Claim 1, **characterized in that** said regulation means provided in order to change the length of the lever arm are composed of bores (9) transversally provided in relation to the groove in the end area of this groove and by a gauged axle (21) slid into these bores allowing to change the length of the lever arm.

3. Sensor according to Claim 1 or 2, **characterized in that** the supporting and guiding arms (7) are bell-shaped, **in that** the bottom of the cable housing in the central bar (2) is rounded and **in that** the fixing clamp (3) is provided with two opposite sides adapted to different cable diameters so that by simply turning the clamp over, it is possible to fix flexible structures such as cables with small and large diameters on said bar.
